# EUROPEAN PATENT SPECIFICATION

(11) **EP 1 841 810 B1**
(45) Date of publication and mention of the grant of the patent: **09.05.2012**
(21) Application number: 05750719.6
(22) Date of filing: 15.06.2005
(51) Int. Cl.: C08G 77/38, C08L 69/00, C08K 9/10

(54) **SILICONE IMPACT MODIFIER WITH HIGH REFRACTIVE INDEX AND METHOD FOR PREPARING THE SAME**
SILIKON-SCHLAGZÄHIGKEITSMODIFIKATOR MIT HOHEM BRECHUNGSINDEX UND HERSTELLUNGSVERFAHREN DAFÜR
AGENT ANTICHOC EN SILICONE À INDICE DE RÉFRACTION ÉLEVÉ ET SON PROCÉDÉ DE FABRICATION

(30) Priority: 31.12.2004 KR 20040117912
(43) Date of publication of application: 10.10.2007
(60) Divisional application: 11181266.5
(73) Proprietor: CHEIL INDUSTRIES INC., Gumi-si, Gyeongsangbuk-do 730-710 (KR)
(72) Inventor: LEE, Han Su, Gyeongsangbuk-do 730-710 (KR); MIN, Sung Sig, Seoul 157-040 (KR); LEE, Byung Choon, Seoul 120-846 (KR); LEE, Byeong Do, Gyeongsangbuk-do 730-710 (KR)
(74) Representative: Bublak, Wolfgang
(86) International application number: PCT/KR2005/001831
(87) International publication number: WO 2006/070983

(56) References cited:
- EP-A- 0 246 537
- EP-A- 0 307 963
- WO-A-00/34346
- JP-A- 09 157 484
- JP-A- 2000 290 482
- KR-A- 20040 095 402
- KR-A- 20050 015 088
- KR-A- 20050 049 127
- KR-A- 20050 060 604
- US-A- 5 132 359
- US-A- 6 153 694

## Description

### Technical Field

The present invention relates to a silicone impact modifier with high refractive index and method for preparing the same. More particularly, the present invention relates to a silicone impact modifier that comprises a rubber core consisting of an organosiloxane-alkylacrylate-styrenic aromatic compound cross-linked copolymer and a plastic shell consisting of a vinyl (co)polymer and provides a thermoplastic resin with excellent coloration, impact resistance, heat stability and weather resistance.

### Background Art

In general, a polycarbonate resin has been used as an engineering plastic due to its excellence in impact strength, self-extinguish, dimension stability and heat resistance compared to other resins. Therefore, the resin has been widely applied to office automation (OA) instruments, electric or electronic goods and so on.

However, the polycarbonate resin has poor flowability due to its high melting point, so that the resin requires high processing temperature. Such high processing temperature causes a problem that the resultant molded product suffers from deterioration of impact resistance. For this reason, the polycarbonate resin is blended with various impact modifiers to improve impact resistance.

Although these impact modifiers improve impact strength of the polycarbonate resin, the use of such impact modifiers further causes problems. For instance, a butadiene rubber-based impact modifier commonly used in polycarbonate tends to be degraded or scorched during over 300 °C of molding process, which results in deterioration of heat stability and weather resistance, so the application has been restricted. In case of an acrylate rubber-based impact modifier, it may provide good heat stability and weather resistance, but the coloration property and impact resistance at low temperature are poor.

U.S. patent Nos. 4,994,522 and 5,132,359 disclose silicone impact modifiers for vinyl chloride resins. However, when these impact modifiers are used in polycarbonate resin, the coloration property is still deteriorated.
Patent document EP 0 246 537 A2 is directed to graft polymers having a silicone rubber core which is surrounded at least by two chemically distinct shells and their use as thermoplastic moulding masses. Said core is a cross-linked silicone rubber having a first shell represented by a cross-linked acrylate rubber and a second shell represented by a polymer or copolymer of resin-forming monomers.
Patent document WO 00/34346 relates to an emulsion polymerisation method for making silicone rubber and polyacrylate rubber hybrids. In particular, the document relates to grafts of the silicone rubber and the polyacrylate rubber hybrids and to the use of such grafts as impact modifiers in thermoplastic resins.
Patent document JP 9-157484 refers to a thermoplastic resin composition comprising (A) a graft copolymer produced by grafting at least one kind of monomer selected from an aromatic alkenyl compound, a methacrylic ester, an arcylate ester and a vinyl cyanide compound to a compositie rubber comprising a polydimethylsiloxane and a polyalkyl(meth)acrylate, and (B) a polycarbonate resin.
Patent document US 5,132,359 refers to a vinyl chloride resin composition comprising a vinyl chloride resin and a compound rubber type graft copolymer wherein one or more vinyl monomers are graft-polymerised onto a compound rubber including polyorganosiloxane rubber and polyalkyl (meth)acrylate rubber entangled in an inseparable fashion.

Accordingly, the present inventors have developed an impact modifier which provides a thermoplastic resin with excellent coloration, impact resistance, heat stability and weather resistance which is obtained by preparing a rubber core through cross-polymerization of an alkylacrylate-styrenic aromatic compound in presence of an organosiloxane cross-linked (co)polymer having a specific particle size and a refractive index and graft (co)polymerizing a vinyl monomer onto the rubber core thereby forming a plastic shell. The refractive index of the impact modifier of the present invention is higher than the value of 1.45~1.47 that of the conventional silicone impact modifier has.

### Disclosure of Invention

### Technical Problem

An object of the present invention is to provide an impact modifier that can improve a coloration property of polycarbonate resin without degradation of other intrinsic properties.

Another object of the present invention is to provide an impact modifier that can provide a polycarbonate with good heat stability, impact resistance at a low temperature and weather resistance.

Other objects and advantages of this invention will be apparent from the ensuing disclosure and appended claims.

### Technical Solution

The present invention relates to the silicone impact modifier that comprises (A) a rubber core consisting of (a₁) an organosiloxane cross-linked (co)polymer with a particle size of 50∼400 nm and (a₂) an alkylacrylate-styrenic aromatic compound cross-linked copolymer; and (B) a plastic shell consisting of a vinyl (co)polymer, and the refractive indexof the silicone impact modifier is 1.49~1.59.

### Best Mode for Carrying Out the Invention

### (A) Rubber Core

In the present invention, the rubber core comprises (a₁) an organosiloxane cross-linked (co)polymer and (a₂) an alkylacrylate-styrenic aromatic compound cross-linked copolymer.

The organosiloxane cross-linked (co)polymer has a refractive indexof 1.41∼1.50 and a particle size of 50~400 nm. If the refractive indexof organosiloxane cross-linked (co)polymer is less than 1.41, the refractive index of the impact modifier cannot reach the level of 1.49, and if the refractive indexof organosiloxane cross-linked (co)polymer is more than 1.50, the glass transition temperature of the organosiloxane polymer becomes higher, so that the affinity for the organic solvents is increased, which incurs deterioration of other properties. Therefore, the preferable range of the refractive index of organosiloxane cross-linked (co)polymer is 1.41~1.50, more preferably 1.41~1.45 in view of physical property balance.

Further, if the particle size of the organosiloxane cross-linked (co)polymer is less than 50 nm or more than 400 nm, the impact modifying effect is reduced. So, it is preferable that the range of the particle size of the organosiloxane cross-linked (co)polymer is 50∼400 nm.

The organosiloxane cross-linked (co)polymer (a₁) of the present invention is the organosiloxane (co)polymer which has a cross-linked structure. Examples of the organosiloxane cross-linked (co)polymer include polydimethylsiloxane, poly-methylphenylsiloxane, polydiphenylsiloxane, and so forth. By copolymerizing two or more kinds of organosiloxane monomer/oligomer, it is possible to adjust the refractive index of the organosiloxane cross-linked copolymer to 1.41∼1.50. Preferably, the organosiloxane (co)polymer of the present invention is cross-linked. If the organosiloxane (co)polymer is not cross-linked, it undesirably loses rubber properties, which results in degradation of impact resistance, and the coloration property is also deteriorated due to the diffusion of organosiloxane (co)polymer into the surface of product.

Degree of crosslinking can be determined by solubility of the organosiloxane cross-linked (co)polymer in an organic solvent. The higher the degree of crosslinking, the lower the solubility in organic solvent. As the organic solvent, acetone or toluene may be used. Thus it is preferable to have an insoluble portion in toluene or acetone. The content of an insoluble portion of the organosiloxane cross-linked (co)polymer in toluene is preferably more than 30%.

Examples of the alkyl acrylate include methyl acrylate, ethyl acrylate, n-butyl acrylate and the like. Most preferable example is n-butyl acrylate, since it has a low glass transition temperature.

Examples of the styrenic aromatic compound include styrene, α-methylstyrene, divinylbenzene, vinyltoluene and the like. Among them, styrene is preferably used.

The alkylacrylate-styrenic aromatic compound cross-linked copolymer is prepared by copolymerizing an alkylacrylate with a styrenic aromatic compound in the presence of cross-linking agent.

The weight ratio of (a₁) the organosiloxane cross-linked (co)polymer to (a₂) the alkylacrylate-styrenic aromatic compound cross-linked copolymer or the alkylacrylate cross-linked copolymer is preferably 1 : 6~6 : 1.

If the weight ratio of the organosiloxane cross-linked (co)polymer(a₁) to the alkylacrylate-styrenic aromatic compound cross-linked copolymer(a₂) is less than 1 : 6, the impact modifying effect at low temperature is reduced, and if the weight ratio is more than 6 : 1, the content of organosiloxane cross-linked (co)polymer is relatively increased, which causes the affinity between resin and impact modifier to be decreased, so that the impact modifying effect is reduced and higher production cost is needed.

The weight ratio of the alkylacrylate to the styrenic aromatic compound in the alkylacrylate-styrenic aromatic compound cross-linked copolymer (a₂) is preferably 1 : 1~20:1.

If the weight ratio of the alkylacrylate to the styrenic aromatic compound is less than 1:1, the glass transition temperature of the alkylacrylate becomes extremely increased, so that the impact modifying effect is reduced, and if the weight ratio is more than 20 : 1, the refractive index and coloration property are deteriorated.

### (B) Plastic Shell

The plastic shell of the present invention is a vinyl (co)polymer and is formed on the surface of the rubber core by graft (co)polymerizing a vinyl monomer onto the rubber core.

Examples of the vinyl monomer include alkylmethacrylate, acrylate and ethylenically unsaturated aromatic compound and so forth. For example, methylmethacylate, styrene, acrylonitrile or a mixture of two or more thereof is preferable.

In the present invention, the weight ratio of the rubber core(A) to the plastic shell (B) is 5 : 5∼9 : 1.

If the weight ratio of the rubber core (A) to the plastic shell (B) is less than 5 : 5, the rubber content is relatively reduced, so that the effect for the improvement of the impact strength becomes lowered. If the ratio is more than 9:1, the compatibility between resin and impact modifier is decreased, so that the impact modifying effect is also reduced and it causes higher production cost.

The impact modifier of the present invention has a refractive index within the range from 1.49 to 1.59, preferably from 1.50 to 1.57. If the refractive index is less than 1.49, the difference in refractive index between the impact modifier and the polycarbonate become increased, so that the coloration property is deteriorated.

The method of preparing the silicone impact modifier of the present invention will now be described in detail.

In the present invention, the method of preparing of the silicone impact modifier of the present invention comprises preparing a rubber core through cross-polymerization by adding an alkylacrylate and a styrenic aromatic compound to an organosiloxane cross-linked (co)polymer having a particle size of 50∼400 nm and a refractive indexof 1.41∼1.50; and graft (co)polymerizing a vinyl monomer onto the rubber core thereby forming a plastic shell.

In the present invention, the organosiloxane cross-linked (co)polymer is used in a dispersed state (called "silicone latex") prepared by dispersing the organosiloxane cross-linked (co)polymer into ion-exchanged water in the presence of an emulsifier.

The organosiloxane is selected from the group consisting of dimethylsiloxane, methylphenylsiloxane, diphenylsiloxane, and a mixture or a copolymer thereof. The organosiloxane cross-linked (co)polymer of the present invention is used in an amount of 5~90 parts by weight, preferably 10~50 parts by weight based on the total weight of reactants.

As the emulsifier, anionic emulsifier such as sodium, potassium, or ammonium salt of alkylsulfate containing from 4 to 30 carbon atoms can be used. Examples of the emulsifier include sodium dodecyl sulfate, sodium dodecylbenzene sulfate and the like. Among them, sodium dodecylbenzene sulfate is more preferable for its versatility in a wide range of pH. The emulsifier is used in an amount of 0.1∼5 parts by weight, preferably 0.1~2 parts by weight based on the total weight of reactants.

To the silicone latex, an alkyl acrylate monomer, a styrenic aromatic compound and a crosslinking agent are added under nitrogen stream, and heated to 50∼100°C. The organosiloxane cross-linked (co)polymer is swelled by alkyl acrylate monomer, a styrenic aromatic compound and a crosslinking agent. And then the polymerization is carried out at 50∼100°C by adding a polymerization initiator to obtain the rubber core.

Examples of the alkyl acrylate monomer include methyl acrylate, ethyl acrylate, n-butyl acrylate and the like. Most preferable example is n-butyl acrylate having a low glass transition temperature. The alkyl acrylate monomer is used in an amount of 5~90 parts by weight, preferably 10~50 parts by weight based on the total weight of reactants.

Examples of the styrenic aromatic compound include styrene, α-methylstyrene, divinylbenzene, vinyltoluene and the mixture thereof. Among them, styrene is preferably used. The styrenic aromatic compound is used in an amount of 0.01~50 parts by weight, preferably 1~30 parts by weight based on the total weight of reactants.

Examples of the crosslinking agent include allyl methacrylate, triallyl cyanurate, triallyl isocyanurate, divinylbenzene and the like. Among them, allyl methacrylate and triallyl isocyanurate is preferred. The crosslinking agent is used in an amount of 0.1∼10 parts by weight, preferably 0.1~5 parts by weight based on the total weight of reactants.

As the polymerization initiator, free-radical initiators that generate free-radicals through thermal decomposition or oxidation-reduction reaction can be used. Suitable polymerization initiators comprise potassium persulfate, magnesium persulfate, benzoyl peroxide, hydrogen peroxide, dibenzyl peroxide, cumene hydroperoxide, *tert-*butyl hydroperoxide and the like. Among them, water-soluble initiator such as potassium persulfate is preferred. The polymerization initiator is used in an amount of 0.1~5 parts by weight, preferably 0.1~2 parts by weight.

To the rubber core, a polymerization initiator and a vinyl monomer is added dropwise continuously at 50∼100 °C to form a plastic shell, followed by coagulation by means of the addition of a coagulating agent and filtration to prepare a silicone impact modifier with high refractive index.

Examples of the vinyl monomer include alkylmethacrylate, acrylate and ethylenically unsaturated aromatic compound and so forth. Among them, methylmethacylate, styrene, acrylonitrile or a mixture of two or more thereof is preferable. The vinyl monomer of the present invention is used in an amount of 5~90 parts by weight, preferably 10~50 parts by weight based on the total weight of reactants.

As the coagulating agent, metal salt such as magnesium chloride, calcium chloride, magnesium sulfate, calcium sulfate or the like can be used.

The impact modifier thus obtained has a high refractive indexof 1.49∼1.59. The impact modifier of the present invention can provide a thermoplastic resin with good heat stability, impact resistance even at low temperatures, weather resistance, and excellent coloration. The thermoplastic resin that can be used in the present invention is not particularly limited. Examples of the thermoplastic resin include a vinyl chloride resin, a styrenic resin, a styrene-acrylonitrile resin, an acrylic resin, a polyester resin, an ABS resin, a polycarbonate resin, and so forth. Especially, when the impact modifier of the present invention is used in polycarbonate resin for housings of electronic instrument, the effect is magnified.

When the thermoplastic resin is a polycarbonate resin, the silicone impact modifier of the present invention is blended into the composition in an amount of 0.5~30 parts by weight, per 100 parts by weight of the polycarbonate resin.

The present invention may be better understood by reference to the following examples that are intended for the purpose of illustration and are not to be construed as in any way limiting the scope of the present invention, which is defined in the claims appended hereto.

### Mode for the Invention

### Examples

### Example 1

90g of dimethylsiloxane-diphenylsiloxane cross-linked copolymer having a refractive index of 1.43, a particle size of 170 nm and 65% of an insoluble portion in toluene and 1.4 g of sodium dodecylbenzene sulfate were dispersed into 760 g ion-exchanged water to obtain a silicone latex. To the silicone latex, 190 g of n-butylacrylate, 36 g of styrene and 9 g of triallyl isocyanurate were added and mixed at room temperature. To the mixture was added 1.8 g of potassium persulfate maintaining the temperature at 75 °C and the polymerization was carried out for 4 hours. And thereto was further added 0.7 g potassium persulfate followed by adding dropwise a mixed solution consisting of 101.25 g of styrene and 33.75 g of acrylonitrile for 15 minutes. After reacting for 4 hours at 75°C, the system was cooled to room temperature. The conversion was 97.4%. The obtained latex was coagulated in a 1.5% aqueous MgSO₄ solution maintained at 75 °C, and then the coagulated latex was washed and dried to obtain an impact modifier in a powder form.

### Example 2

112.5 g of dimethylsiloxane-diphenylsiloxane cross-linked copolymer having a refractive index of 1.45, a particle size of 210 nm and 60% of an insoluble portion in toluene and 2.7 g of sodium dodecylbenzene sulfate were dispersed into 980 g of ion-exchanged water to obtain a silicone latex. To the silicone latex, 112.5 g of n-butylacrylate, 90 g of styrene and 9 g of triallyl isocyanurate were added and mixed at room temperature. The subsequent procedure was conducted in the same manner as in Example 1 to obtain an impact modifier in a powder form. The conversion was 95.8%.

### Example 3

112.5 g of dimethylsiloxane-diphenylsiloxane cross-linked copolymer having a refractive index of 1.49, a particle size of 130 nm and 55% of an insoluble portion in toluene and 2.7 g of sodium dodecylbenzene sulfate were dispersed into 980 g of ion-exchanged water to obtain a silicone latex. To the silicone latex, 107.8 g of n-butylacrylate, 90 g of styrene and 4.7 g of allyl methacrylate were added and mixed at room temperature. The subsequent procedure was conducted in the same manner as in Example 1 to obtain an impact modifier in a powder form. The conversion was 95.2%.

### Example 4

67.5 g of dimethylsiloxane cross-linked polymer having a refractive index of 1.41, a particle size of 250 nm and 68% of an insoluble portion in toluene and 3.2 g of sodium dodecylbenzene sulfate were dispersed into 980 g ion-exchanged water to obtain a silicone latex. To the silicone latex, 171 g of n-butylacrylate, 76.5 g of styrene and 4.5 g of allyl methacrylate were added and mixed at room temperature. To the mixture was added 1.8 g of potassium persulfate maintaining the temperature at 75 °C and the polymerization was carried out for 4 hours. And thereto was further added 0.68 g potassium persulfate followed by adding dropwise a mixed solution consisting of 49.5 g of styrene, 36 g of acrylonitrile and 49.5 g of methylmethacrylate for 15 minutes. The subsequent procedure was conducted in the same manner as in Example 1 to obtain an impact modifier in a powder form. The conversion was 95.2%.

### Comparative Example 1

157.5 g of dimethylsiloxane cross-linked polymer having a refractive index of 1.41, a particle size of 300 nm and 69% of an insoluble portion in toluene and 3.15 g of sodium dodecylbenzene sulfate were dispersed into 976 g of ion-exchanged water to obtain a silicone latex. To the silicone latex, 153 g of n-butylacrylate and 4.5 g of allyl methacrylate were added and mixed at room temperature. The subsequent procedure was conducted in the same manner as in Example 1 to obtain an impact modifier in a powder form. The conversion was 97.6%.

### Comparative Example 2

Metablen SRK-200(product name) manufactured by Mitsubishi Rayon Company of Japan was used as a silicone impact modifier.

### Comparative Example 3

Comparative Example 3 was conducted in the same manner as in Example 1 except that 90 g of dimethylsiloxane-diphenylsiloxane linear copolymer having a refractive index of 1.43, a particle size of 220 nm and less than 5% of an insoluble portion in toluene was used instead of dimethylsiloxane-diphenylsiloxane cross-linked copolymer. The conversion was 94.6%.

The physical properties of the silicone impact modifiers obtained in the above Examples and Comparative Examples were measured as follow:

(1) Refractive Index: Using samples prepared by hot pressing the resulting impact modifier to the thickness of 1 mm, the refractive index was measured by using a light of laser wave length 632.8 nm by a prism coupler type laser refractometer (product name: SPA-4000) made by Sairon Tech. company.

(2) Coloration Property: The coloration property was evaluated using molded samples prepared by mixing polycarbonate, impact modifier and carbon black in proportion of 97 : 3 : 0.2 by observing it with naked eyes. Also, brightness (L*) of the molded sample was measured by means of a spectrophotometer (CM-3600d) manufactured by Konica Minota Company.

(3) Impact Resistance: Polycarbonate, impact modifier and carbon black were mixed in proportion of 97 : 3 : 0.2 and extruded through a twin screw extruder with Φ=45 mm in pellets. The pellets were dried at 110 °C over 3 hours and then molded using a 10 oz injection molding machine at 260∼330 °C and barrel temperature of 60∼100 °C into 1/8" Izod test bars and plate test specimens (thickness : 3 mm) respectively. The impact resistance was evaluated by Izod impact resistance test in accordance with ASTM D-256 and by falling ball impact test.

**Table 1**

| | Refractive Index | Coloration | | Izod Impact strength(kgf·cm/cm) | | Falling Ball Impact Test Breakdown (%) | |
|---|---|---|---|---|---|---|---|
| | | L*,^{a)} | Eye test | 25°C | -30 °C | | |
| Examples | 1 | 1.502 | 8 | good | 81 | 24 | 0 |
| | 2 | 1.530 | 6 | Very good | 75 | 21 | 0 |
| | 3 | 1.492 | 10 | good | 80 | 23 | 0 |
| | 4 | 1.497 | 10 | good | 83 | 22 | 0 |
| Comparative Examples | 1 | 1.472 | 19 | bad | 76 | 24 | 0 |
| | 2 | 1.475 | 20 | Very bad | 80 | 25 | 0 |
| | 3 | 1.500 | 12 | bad | 73 | 19 | 5 |

| | | | | | | | |
|---|---|---|---|---|---|---|---|
| a) The lower the brightness(L*), the better the coloration property. | | | | | | | |

As shown above, the impact modifiers of Examples 1-4 show higher refractive index (more than 1.49) and better coloration property without deterioration of impact strength than those of Comparative Examples 1-2. In particular, the impact modifier of Comparative Example 3 which employs linear organosiloxane copolymer shows poor impact strength and bad coloration property even it has high refractive index of 1.500.

The present invention can be easily carried out by an ordinary skilled person in the art. Many modifications and changes may be deemed to be with the scope of the present invention as defined in the following claims.

## Claims

1. A silicone impact modifier comprising:
(A) a rubber core consisting of (a₁) an organosiloxane cross-linked (co)polymer with a particle size of 50∼400 nm and (a₂) an alkylacrylate-styrene aromatic compound cross-linked copolymer; and
(B) a plastic shell consisting of a vinyl (co)polymer;
wherein the refractive index of the silicone impact modifier is 1.49∼1.59.

2. The silicone impact modifier as defined in claim 1, wherein the refractive index of said organosiloxane cross-linked (co)polymer (a₁) is 1.41~1.50.

3. The silicone impact modifier as defined in claim 1, the weight ratio of (a₁) the organosiloxane cross-linked (co)polymer to (a₂) the alkylacrylate-styrenic aromatic compound cross-linked copolymer is 1 : 6∼6:1; and the weight ratio of the alkylacrylate to the styrenic aromatic compound in said alkylacrylate-styrenic aromatic compound cross-linked copolymer(a₂) is 1 : 1∼20 : 1.

4. The silicone impact modifier as defined in claim 1, the weight ratio of the rubber core (A) to the plastic shell (B) is 5 : 5∼9 : 1.

5. A method of preparing the silicone impact modifier comprising:
preparing a rubber core through cross-polymerization by adding an alkylacrylate and a styrenic aromatic compound to an organosiloxane cross-linked (co)polymer having a particle size of 50∼400 nm; and
graft (co)polymerizing a vinyl monomer onto the rubber core to form a plastic shell.

6. The method of preparing the silicone impact modifier as defined in claim 5, wherein said organosiloxane is selected from the group consisting of dimethylsiloxane, methylphenylsiloxane, diphenylsiloxane and a mixture or a copolymer thereof; said alkylacrylate is n-butylacrylate; said styrenic aromatic compound is selected from the group consisting of styrene, α-methylstyrene, divinylbenzene, vinyltoluene and the mixture thereof; said vinyl monomer is selected from the group consisting of methylmethacylate, styrene, acrylonitrile and a mixture thereof.

7. The method of preparing the silicone impact modifier as defined in claim 5, wherein said cross-polymerization is conducted by using allyl methacrylate or triallyl isocyanurate as a crosslinking agent.

8. The method of preparing the silicone impact modifier as defined in claim 5, wherein the amount of the organosiloxane cross-linked (co)polymer is 5~90 parts by weight, the amount of the alkyl acrylate is 5~90 parts by weight, the amount of the styrenic aromatic compound is 0.01∼50 parts by weight, and the amount of the vinyl monomer is 5~90 parts by weight.

9. A thermoplastic resin composition comprising the silicone impact modifier of claim 1 and a thermoplastic resin.

10. The thermoplastic resin composition as defined in claim 9, wherein said thermoplastic resin is selected from the group consisting of a vinyl chloride resin, a styrenic resin, a styrene-acrylonitrile resin, an acrylic resin, a polyester resin, an ABS resin and a polycarbonate resin.

11. The thermoplastic resin composition as defined in claim 10, wherein said thermoplastic resin is a polycarbonate resin, and the impact strength modifier is blended into the composition in an amount of 0.5~30 parts by weight, per 100 parts by weight of the polycarbonate resin.

## Patentansprüche

1. Silikon-Schlagmodifikator, umfassend:
(A) einen Kautschukkern, bestehend aus (a₁) einem mit Organosiloxan vernetzten (Co)Polymer mit einer Teilchengröße von 50-400 nm und (a₂) einem mit Alkylacrylat-Styrol-aromatischer Verbindung vernetzten Copolymer; und
(B) einer Kunststoffschale, bestehend aus einem Vinyl(co)polymer;
wobei der Brechungsindex des Silikon-Schlagmodifikators 1,49-1,59 beträgt.

2. Silikon-Schlagmodifikator nach Anspruch 1, wobei der Brechungsindex des mit Organosiloxan vernetzten (Co)Polymers (a₁) 1,41-1,50 beträgt.

3. Silikon-Schlagmodifikator nach Anspruch 1, wobei das Gewichtsverhältnis von (a₁) des mit Organosiloxan vernetzten (Co)Polymers zu dem (a₂) mit Alkylacrylat-Styrol-aromatischer Verbindung vernetzten Copolymer 1:6 - 6:1 beträgt; und das Gewichtsverhältnis des Alkylacrylats zu der Styrol-aromatischen Verbindung in dem mit Alkylacrylat-Styrol-aromatischer Verbindung vernetzten Copolymer (a₂) 1:1 - 20:1 beträgt.

4. Silikon-Schlagmodifikator nach Anspruch 1, wobei das Gewichtsverhältnis des Kautschukkerns (A) zu der Kunststoffschale (B) 5:5 - 9:1 beträgt.

5. Verfahren zur Herstellung des Silikon-Schlagmodifikators, umfassend:
Herstellen eines Kautschukkerns durch Vernetzungspolymerisation durch Zugabe eines Alkylacrylats und einer Styrol-aromatischen Verbindung zu einem mit Organosiloxan vernetzten (Co)Polymer mit einer Teilchengröße von 50-400 nm; und
Pfropf(co)polymerisieren eines Vinylmonomers auf den Kautschukkern zum Bilden einer Kunststoffschale.

6. Verfahren zur Herstellung des Silikon-Schlagmodifikators nach Anspruch 5, wobei das Organosiloxan ausgewählt ist aus der Gruppe, bestehend aus Dimethylsiloxan, Methylphenylsiloxan, Diphenylsiloxan und einem Gemisch oder einem Copolymer davon; das Alkylacrylat n-Butylacrylat ist; wobei die Styrol-aromatische Verbindung ausgewählt ist aus der Gruppe, bestehend aus Styrol, α-Methylstyrol, Divinylbenzol, Vinyltoluol und dem Gemisch davon; wobei das Vinylmonomer ausgewählt ist aus der Gruppe, bestehend aus Methylmethacrylat, Styrol, Acrylnitril und einem Gemisch davon.

7. Verfahren zur Herstellung des Silikon-Schlagmodifikators nach Anspruch 5, wobei die Vernetzungspolymerisation durch Verwendung von Allylmethacrylat oder Triallylisocyanurat als Vernetzungsmittel durchgeführt wird.

8. Verfahren zur Herstellung des Silikon-Schlagmodifikators nach Anspruch 5, wobei die Menge des mit Organosiloxan vernetzten (Co)Polymers 5-90 Gewichtsteile, die Menge des Alkylacrylats 5-90 Gewichtsteile, die Menge der Styrol-aromatischen Verbindung 0,01-50 Gewichtsteile und die Menge des Vinylmonomers 5-90 Gewichtsteile beträgt.

9. Thermoplastische Harzzusammensetzung, umfassend den Silikon-Schlagmodifikator nach Anspruch 1 und ein thermoplastisches Harz.

10. Thermoplastische Harzzusammensetzung nach Anspruch 9, wobei das thermoplastische Harz ausgewählt ist aus der Gruppe, bestehend aus einem Vinylchloridharz, einem Styrolharz, einem Styrol-Acrylnitril-Harz, einem Acrylharz, einem Polyesterharz, einem ABS-Harz und einem Polycarbonatharz.

11. Thermoplastische Harzzusammensetzung nach Anspruch 10, wobei das thermoplastische Harz ein Polycarbonatharz ist, und der Schlagzähigkeitsmodifikator in einer Menge von 0,5-30 Gewichtsteile pro 100 Gewichtsteile des Polycarbonatharzes in die Zusammensetzung gemischt ist.

## Revendications

1. Modifiant choc siliconé, comprenant :
(A) un coeur de caoutchouc, consistant en (a₁) un (co)polymère réticulé d'organosiloxane, ayant une granulométrie de 50-400 nm, et (a₂) un copolymère réticulé acrylate d'alkyle-composé aromatique styrénique ; et
(B) une coque plastique consistant en un (co)polymère vinylique ;
l'indice de réfraction du modifiant choc siliconé étant de 1,49-1,59.

2. Modifiant choc siliconé tel que défini dans la revendication 1, dans lequel l'indice de réfraction dudit (co)polymère réticulé d'organosiloxane (a₁) est de 1,41-1,50.

3. Modifiant choc siliconé tel que défini dans la revendication 1, dans lequel le rapport en poids de (a₁) le (co)polymère réticulé d'organosiloxane à (a₂) le copolymère réticulé acrylate d'alkyle-composé aromatique styrénique, est de 1:6-6:1 ; et le rapport en poids de l'acrylate d'alkyle au composé aromatique styrénique dans lesdits (co)polymères réticulés acrylate d'alkyle-composé aromatique styrénique est de 1:1-20:1.

4. Modifiant choc siliconé tel que défini dans la revendication 1, le rapport en poids du coeur de caoutchouc (A) à la coque plastique (B) étant de 5:5-9:1.

5. Procédé de préparation du modifiant choc siliconé, comprenant la préparation d'un coeur de caoutchouc par polymérisation croisée, par addition d'un acrylate d'alkyle et d'un composé aromatique styrénique à un (co)polymère réticulé d'organosiloxane ayant une granulométrie de 50-400 nm ; et la (co)polymérisation par greffage d'un monomère vinylique sur le coeur de caoutchouc pour former une coque plastique.

6. Procédé de préparation du modifiant choc siliconé tel que défini dans la revendication 5, dans lequel ledit organosiloxane est choisi dans le groupe consistant en le diméthylsiloxane, le méthylphénylsiloxane, le diphénylsiloxane et un mélange ou un copolymère de ceux-ci ; ledit acrylate d'alkyle est l'acrylate de n-butyle ; ledit composé aromatique styrénique est choisi dans le groupe consistant en le styrène, l'α-méthylstyrène, le divinylbenzène, le vinyltoluène et les mélanges de ceux-ci ; ledit monomère vinylique est choisi dans le groupe consistant en le méthacrylate de méthyle, le styrène, l'acrylonitrile et les mélanges de ceux-ci.

7. Procédé de préparation du modifiant choc siliconé tel que défini dans la revendication 5, dans lequel ladite polymérisation croisée est mise en oeuvre par utilisation de méthacrylate d'allyle ou d'isocyanurate de triallyle en tant qu'agent de réticulation.

8. Procédé de préparation du modifiant choc siliconé tel que défini dans la revendication 5, dans lequel la quantité du (co)polymère réticulé d'organosiloxane est de 5-90 parties en poids, la quantité de l'acrylate d'alkyle est de 5-90 parties en poids, la quantité du composé aromatique styrénique est de 0,01-50 parties en poids, et la quantité du monomère vinylique est de 5-90 parties en poids.

9. Composition de résine thermoplastique comprenant le modifiant choc siliconé de la revendication 1 et une résine thermoplastique.

10. Composition de résine thermoplastique telle que définie dans la revendication 9, dans laquelle ladite résine thermoplastique est choisie dans le groupe consistant en une résine de chlorure de vinyle, une résine styrénique, une résine de styrène-acrylonitrile, une résine acrylique, une résine de polyester, une résine ABS et une résine de polycarbonate.

11. Composition de résine thermoplastique telle que définie dans la revendication 10, dans laquelle ladite résine thermoplastique est une résine de polycarbonate, et l'agent modifiant la résistance au choc est mélangé à la composition en une quantité de 0,5-30 parties en poids pour 100 parties en poids de la résine de polycarbonate.
